# EUROPEAN PATENT APPLICATION

(11) **EP 2 189 269 A1**
(43) Date of publication of application: **26.05.2010**
(21) Application number: 09175448.1
(22) Date of filing: 09.11.2009
(51) Int. Cl.: B29C 65/00, B63H 9/06, B29C 70/34

(54) **Method of producing sails using reinforced, formed fabrics**

(30) Priority: 02.12.2008 US 326683; 19.11.2008 US 274163; 19.11.2008 US 274307; 19.11.2008 US 274209; 19.11.2008 US 274214
(71) Applicant: Createx S.A., 1110 Morges (CH); Gautier, Gérard, 1169 Yens (CH); Kessi, Edouard, VD 1162 Vaud (CH)
(72) Inventor: Gautier, Gerard, 1169, Yens (CH); Kessi, Edouard, VD 1162, Vaud (CH)
(74) Representative: Lawrence, John

(57) **Abstract**

The present disclosure relates to methods and compositions useful for the manufacture of sails. Particularly, the present disclosure relates to shaped, reinforced fabrics that can be used to make high-performance, shaped, reinforced sails. In one embodiment, a method of manufacturing a reinforced sail comprises positioning strips (34, 49-55), comprising filaments and resin, onto a first surface to form panels (158), positioning the panels (158) onto a shaped mold, wherein adjacent panels overlap, applying pressure and heat to the panels on the mold thereby joining the panels to form a shaped fabric, and forming a sail from the shaped fabric.

## Description

### CROSS-REFERENCE TO RELATED PATENT APPLICATIONS

This application is a continuation-in-part of U.S. Application 10/521,160 which is the U.S. National Stage of PCT/CH03/00415, filed June 25, 2003, which claims priority to Swiss Patent document CH 1150/02, filed July 2, 2002, all of which are incorporated herein by reference in their entirety.

### BACKGROUND

When in use, sails undergo directional forces along load lines, at or between eyelets, and along the leech and luff. Accordingly, reinforcements may be necessary to distribute the forces, maintain the shape of the sail and to avoid damaging the sail, such as by stretching or tearing.

In many cases, it is also necessary for the fabric to have particular shapes in three dimensions whether for reasons of performance or aesthetics.

Such high-performance, reinforced and shaped sails may be subject to several parameters including commercial criteria. Such criteria may include a fabric that is high-performance (*e.g*., maintains shape and integrity), is lightweight, and of course, is priced as low as possible.

Many sail-making methods and sail fabrics are known; however, there are some drawbacks.

A basic drawback to many of the known, high-performance reinforced and shaped fabrics presently used for sail manufacture is that the structure of the fabric includes at least three components: 1) a top sheet; 2) reinforcing elements; and 3) a bottom sheet. In general, the reinforcing elements are bonded in a sandwich between the two cover sheets (*e.g*., polymerized plastic sheets). This type of fabric construction is not only expensive, it is also relatively heavy. Moreover, materials used to form the top and bottom layers, such as polymerized plastic sheets, are semi-rigid and may not allow local deformations.

Some sail manufacturing methods use a mold to create a sail with a three-dimensional shape over the entirety of the sail. Consequently, a mold the same size as the sail is required. Additionally, because the reinforcing yarns are generally positioned as one single piece, the placement of the elements can be very tricky.

Other known methods of sail manufacture include assembling several fabric panels from different cuts, the panels being assembled together by sewing or bonding. With these methods, the seams are fragile and often require reinforcing panels themselves, added by more sewing or boding. Such additional reinforcing panels add to the overall weight of the sail. Moreover, at the location of seams and reinforcing panels, the sail is less flexible than at other regions, which can cause creases, and then fatigue, when the sail takes the desired shape. Such creases are not only unsightly, but also reduce the performance and life of the sail.

### SUMMARY

The present disclosure relates to methods of manufacturing shaped and reinforced fabrics, and more particularly to methods of manufacturing sails using such fabrics. Generally, the fabrics comprise composite elements which comprise a cured or hardened resin encasing reinforcing elements, such as yarns, but do not include outer layers of film or cover sheets. The fabrics may also have film or other materials sandwiched between layers of yarns. These elements can be shaped in three dimensions, including on a mold, so that a sail formed from the fabric also has a desired shape in three dimensions.

One method of manufacturing the novel shaped and reinforced fabric comprises carrying out the manufacture of the fabric continuously. A press of small width compared with the length of the fabric successively presses the constituent elements of the fabric. Reinforcing elements, yarns for example, are prepared on a belt which is disposed able to move on a preparation table and discontinuous reinforcing elements are disposed overlapping the waiting part of the fabric already pressed. The reinforcing elements can thus be disposed in all directions according to the direction and magnitude of the forces to which the fabric may be subjected. The upper and lower chambers of the press comprise movable and adjustable devices which make it possible to obtain, during pressing, a desired shape in three dimensions at desired locations. By successive forward movements of the fabric and depending on the adjustments, the fabric can have flat portions or have portions in three dimensions, and the shape of the portions in three dimensions can be varied quickly according to the final shape provided for the fabric. The elements that constitute the fabric include yarns which are encased by a membrane; the membrane comprises a hardened or cured resin. Before pressing, these elements are in the form of strips which can be constituted by a prepreg of resin and yarns, the preimpregnation having the advantage of holding the yarns. Once pressed, the fabric is comprised of the membrane which is the resin which encases the yarns or rather the filaments of the yarns. In some embodiments, the yarns are made up of thousands of filaments which are distributed over the width of each strip. During preparation, part of each strip is placed on the juxtaposed strips and during pressing the filaments of the different strips intermix so as to constitute a homogeneous and impervious fabric for example.

The principles of manufacture, fabrics and sails described herein have many advantages. One of the advantages is that the fabric once completed comprises two main components, these being the membrane (e.g., hardened or cured resin) and the reinforcing filaments. Consequently, sails constructed using such fabrics are lighter in weight and lower in cost compared to sails manufactured using the three-layer "sandwich" construction or the sewn/bonded panel construction.

The fact that the completed fabric is in the form of a membrane encasing thousands of intermixed filaments makes it possible to obtain a highly homogeneous fabric, with no creases, and with reinforcements (formed by the reinforcing elements) which make it possible to withstand all the forces to which the fabric may be subjected. The membrane and the filaments also have the advantage of being practically indeformable in the direction of the force while being highly flexible, during folding of the fabric for example.

The press has a very small space requirement compared with the dimensions of fabrics to be manufactured which makes it possible to install it in premises of small dimensions.

A shaping device integrated with a press makes it possible to obtain portions of fabric in three dimensions, which makes it possible to obtain a finished fabric in three dimensions. Such an integrated device has many advantages. One of these advantages is that the shaping device makes it possible to eliminate expensive tools such as the three-dimensional molds. This is because the shaping device can allow a multitude of different shapes to be obtained by simple and very quick adjustments.

This is advantageous during the manufacture and the development of new fabrics having new shapes. For example, the set-up for a new sail shape or design can be provided quickly by simple adjustments with the integrated device. The new sail can then be quickly made, tested and modified as necessary.

Thus, the methods and fabrics described herein make it possible manufacture higher performance sails at reduced costs.

The accompanying figures illustrate schematically and by way of example fabric and sail embodiments and methods described herein.

The present disclosure is also directed to methods of manufacturing a sail, without a press, and using a shaped mold, such as the mold disclosed in U.S. Patent No. 5,097,784, which is incorporated by reference herein in its entirety. Generally, strips formed from resin and filaments are positioned onto a first surface to form panels, and the panels are then positioned onto a shaped mold such that adjacent panels are overlapping. In other embodiments, the strips are positioned directly onto a shaped mold. Once on the mold, the positioned strips are subject to heat and pressure. The heat and pressure join the strips, thereby forming a shaped fabric. The shaped fabric can then be used to form a sail.

In some embodiments the strips are formed of filaments and resin. That is, the yarns (reinforcing elements) are separated into component filaments, and the application of resin or glue forms the strips. Because the yarns are already separated into filaments, less heat and pressure are required, as compared to the method described above, using a press, to cause the strips to form a homogeneous fabric.

The filaments that make up the strips may be formed from a number of different yarns. For example, in some embodiments, the filaments are formed from carbon, aramid, polyester and combinations thereof. Additionally, filaments of different dimensions may be used (*e.g*., different widths). In further embodiments, the strips may comprise a single type of filament or a plurality of filament types.

In some embodiments, heat and pressure are applied simultaneously. In other embodiments, heat and pressure are applied serially. In some embodiments, pressure is applied by forming a vacuum bag over the positioned strips (*e.g*., panels) on the mold, and applying a vacuum. In some embodiments, the pressure is applied to about 1800 pounds per square foot. In still other embodiments, heat is applied by running a heat blanket over the positioned strips.

In some embodiments, strips are positioned on the mold such that the filaments of the strips are generally parallel to the lines of force to which the sail will be subjected. In other embodiments, strips are positioned in a location on the sail that is predicted to require reinforcement. Corners of sails (*i*.*e*., head, tack and clew), at or between eyelets, and along the leech and luff are examples of such locations. For example, strips may be positioned such that the filaments of the positioned strips extend outwardly from the corner of a sail in a generally non-parallel orientation (*e.g*., along predicted load lines). In some embodiments, strips may be positioned to partially or completely overlap other strips, run perpendicular to other strips and/or run parallel to other strips.

According to one aspect, the invention comprises a method of manufacturing shaped and reinforced fabrics, wherein the fabric comprises a membrane which encases reinforcing elements, the method comprising: providing a press which comprises an upper chamber whose lower part is constituted by a flexible element and a lower chamber whose upper part is constituted by a flexible element, the upper chamber comprising a shaping bar whose shape can be adjusted by adjustment rods and whose adjusted shape causes the elastic deformation in three dimensions of the flexible elements and consequently of the membrane and the reinforcing elements which are in the press, wherein the shaping bar has an active position in which the shaping bar deforms the membrane and reinforcing elements, and an inactive position in which the shaping bar is inactive and there is no deformation of the membrane and the reinforcing elements, preparing portions of membrane and reinforcing elements before pressing on a conveyor belt which is put on a preparation table which then places these portions under the press which provides pressure and heating, and by the fact that the portions of the membrane and reinforcing elements are overlapped during the preparation so as to constitute at the output of the press a homogeneous fabric which comprises flat portions and portions shaped in three dimensions according to multiple shapes determined by the adjustment of the shaping bar during the pressing of each portion of membrane and reinforcing elements whose length is determined by the width of the press and of the preparation table.

The upper chamber of the press may be filled with air whose pressure is adjustable and controlled by a manometer, the pressing pressure being provided by the compressed air contained in the upper chamber.

The lower chamber may be filled with water whose level is maintained by the communicating vessels principally by linking of the water supply andoutlet which is connected to a tank, and whose pressure is maintained during pressing by closure of the valve.

Polymerization or activation of the resin constituting the membrane may be obtained by heating the preparation table.

Activation of the resin may be obtained by heating the preparation table and polymerization may be obtained by heating one or other of the chambers.

Activation or polymerization of the resin may be obtained by heating the press.

The portions of membrane and reinforcing elements may be placed partially overlapping one another so as to guarantee the homogeneity of the fabric.

The portions of membrane and reinforcing elements can be disposed in all directions and also one upon another by crossing according to the direction of the forces to which the fabric is subjected and according to the locations where the fabric has to comprise particular reinforcements.

An element for immobilizing the fabric may be activated during the pressing.

According to another aspect of the invention, a method of manufacturing a sail comprising reinforcing elements and a resin, comprises forming the reinforcing elements and the resin into strips; positioning the strips on a surface, and wherein the strips are positioned to partially overlap one another; shaping at least a portion of the strips in a three-dimensional shape, by providing a press having an upper chamber with an elastically flexible lower element and a lower chamber with an elastically flexible upper element; transferring the positioned strips from the surface and positioning the strips between, and in contact with, the elastically flexible upper element and the elastically flexible lower element; deforming at least a portion of the flexible upper element and at least a portion of the flexible lower element in a three-dimensional shape, thereby deforming the portion of the strips in contact with the portion of the flexible upper element and the portion of the flexible lower element in a three-dimensional shape; applying pressure and heat to the strips; activating and polymerizing the resin to encase the reinforcing elements, thereby forming the fabric.

The reinforcing elements may comprise filaments, and the filaments may be distributed throughout the strip.

Positioning may comprise providing one or more additional strips along at least a portion of a predicted line of force to which the fabric will be subjected. Positioning may comprise providing one or more additional strips in a location where the fabric will require reinforcement.

According to another aspect the invention comprises a method of manufacturing shaped and reinforced fabrics comprising reinforcing elements and a resin, the method comprising positioning the reinforcing elements and the resin on a surface, wherein the reinforcing elements and the resin are in contact with each other; shaping at least a portion of the reinforcing elements and at least a portion of the resin in a three-dimensional shape; applying pressure and heat to the reinforcing elements and the resin; activating and polymerizing the resin to encase the reinforcing elements, thereby forming the fabric, and removing the fabric from the surface.

Positioning may comprise: forming the reinforcing elements and the resin into strips; and positioning the strips on the surface. Shaping may be performed substantially simultaneously with applying pressure and heat. Shaping may comprise providing a press having an upper chamber with an elastically flexible lower element and a lower chamber with an elastically flexible upper element; positioning the reinforcing elements and resin between, and in contact with, the elastically flexible upper element and the elastically flexible lower element; deforming at least a portion of the flexible upper element and at least a portion of the flexible lower element in a three-dimensional shape, thereby deforming the portion of the reinforcing elements and the portion of the resin in contact with the portion of the flexible upper element and the portion of the flexible lower element in a three-dimensional shape. The upper chamber may comprise a shaping bar, and deforming may comprise: adjusting the shape of the shaping bar; and contacting the lower flexible element with the adjusted shaping bar to deform the portion of the flexible lower element, the portion of the flexible upper element, the portion of the reinforcing elements, and the portion of the resin, in a three-dimensional shape. The surface may comprise a preparation table. The preparation table may be separate from the press. Activating the resin or polymerizing the resin may comprise heating the preparation table.

The surface may comprise the elastically flexible upper element of the lower chamber of the press. Activating the resin may comprise heating the preparation table, and polymerizing the resin may comprise heating the upper chamber or heating the lower chamber. Activating the resin or polymerizing the resin may comprise heating the press.

Positioning may comprise positioning the reinforcing elements to partially overlap one another. Positioning may comprise positioning at least one reinforcing element along at least a portion of a predicted line of force to which the fabric will be subjected. Positioning may comprise positioning at least one reinforcing element in a location where the fabric will require reinforcement.

Positioning may comprise positioning the strips to partially overlap one another. Positioning may comprise positioning at least one strip along at least a portion of a predicted line of force to which the fabric will be subjected.

Positioning may comprise positioning at least one strip in a location where the fabric will require reinforcement.

The reinforcing elements may be pre-impregnated with resin.

The strips may comprise reinforcing elements pre-impregnated with resin.

Positioning may further comprise positioning strips in contact with at least a portion of a first fabric comprising a first reinforcing element and a first resin; and wherein the method may further comprise: joining the strips to the first fabric by applying pressure and heat to the first fabric and the strips which are in contact with the first fabric.

The reinforcing elements may comprise filaments, and the method may comprise distributing the filaments throughout fabric.

The reinforcing element may comprise filaments, and the filaments may be distributed throughout the strips.

The fabric may be formed primarily of reinforcing elements and resin.

The fabric may consist essentially of reinforcing elements and resin.

According to another aspect the invention comprises a method of manufacturing shaped and reinforced fabrics comprising reinforcing elements and a resin, the method comprising positioning the reinforcing elements and the resin on a surface, wherein the reinforcing elements and the resin are in contact with each other; shaping at least a portion of the reinforcing elements and at least a portion of the resin in a three-dimensional shape; applying pressure and heat to the reinforcing elements and the resin; activating and polymerizing the resin to encase the reinforcing elements, thereby forming the fabric, wherein the fabric comprises a first surface and an opposing second surface, and wherein both the first surface and the second surface are free of a separate polymerized plastic sheet; and removing the fabric from the surface.

Positioning may comprise layering strips, one on top of the other, to provide a plurality of layers.

The method may further comprise positioning the strips of a first layer at angles with the strips of a second layer. Positioning may comprise positioning at least some of the strips to overlap substantially along a length of each strip.

Positioning may comprise positioning at least some of the strips in parallel, such that a first end of one strip substantially overlaps a first end of a second strip.

According to another aspect, the invention comprises a method of manufacturing a fabric comprising selecting a plurality of reinforcing elements, wherein the reinforcing elements are formed from filaments which are aligned in strip form; arranging the reinforcing elements to form a strip; providing a resin in contact with the reinforcing elements; positioning the strips so that at least some of the strips partially overlap adjacent strips; and activating the resin to encase the reinforcing elements, thereby forming the fabric.

Positioning may comprise positioning at least one additional strip along at least a portion of a predicted line of force to which the fabric will be subjected. The at least one additional strip may be positioned substantially parallel to the predicted lines of force. The at least one additional strip may be positioned substantially perpendicular to the predicted lines of force. The at least one additional strip may be positioned substantially parallel and at least one additional strip may be positioned substantially perpendicular to the predicted lines of force. Positioning may comprise positioning at least one additional strip in a location where the fabric will require reinforcement.

The strips may comprise reinforcing elements pre-impregnated with resin.

According to another aspect the invention comprises a method of manufacturing a shaped fabric comprising: selecting a plurality of reinforcing elements, wherein the reinforcing elements are formed from filaments which are aligned in strip form; arranging the reinforcing elements to form a strip; providing a resin in contact with the reinforcing elements; arranging the strips so that at least some of the strips partially overlap adjacent strips; placing the arranged strips on a surface having a three-dimensional shape; and activating the resin to encase the reinforcing elements, thereby forming the shaped fabric.

Positioning may comprise positioning at least one additional strip along at least a portion of a predicted line of force to which the fabric will be subjected. The at least one additional strip may be positioned substantially parallel to the predicted lines of force. The at least one additional strip may be positioned substantially perpendicular to the predicted lines of force. The at least one additional strip may be positioned substantially parallel and at least one additional strip may be positioned substantially perpendicular to the predicted lines of force. Positioning may comprise positioning at least one additional strip in a location where the fabric will require reinforcement.

The strips may comprise reinforcing elements pre-impregnated with resin.

According to another aspect the invention comprises a method of manufacturing a shaped fabric comprising: selecting a plurality of reinforcing elements, wherein the reinforcing elements are formed from filaments which are aligned in strip form; providing a resin in contact with the reinforcing elements; arranging the reinforcing elements to form a strip; arranging the strips on a surface having a three dimensional shape so that at least some of the strips partially overlap adjacent strips; and activating the resin to encase the reinforcing elements, thereby forming the shaped fabric.

Positioning may comprise positioning at least one additional strip along at least a portion of a predicted line of force to which the fabric will be subjected. The at least one additional strip may be positioned substantially parallel to the predicted lines of force. The at least one additional strip may be positioned substantially perpendicular to the predicted lines of force. The at least one additional strip may be positioned substantially parallel and at least one additional strip may be positioned substantially perpendicular to the predicted lines of force. Positioning may comprise positioning at least one additional strip in a location where the fabric will require reinforcement.

The strips may comprise reinforcing elements pre-impregnated with resin.

Positioning the strips may comprise layering strips, one on top of the other, to provide a plurality of layers. The method may further comprise positioning the strips of a first layer at angles with the strips of a second layer.

Positioning the strips may comprise positioning at least some of the strips to overlap substantially along a length of each strip. Positioning may comprise positioning at least some of the strips in parallel, such that a first end of one strip substantially overlaps a first end of a second strip. Arranging the strips may comprise layering strips, one on top of the other, to provide a plurality of layers. The method may further comprise positioning the strips of a first layer at angles with the strips of a second layer.

Arranging the strips may comprise positioning at least some of the strips to overlap substantially along a length of each strip. Arranging the strips may comprise positioning at least some of the strips in parallel, such that a first end of one strip substantially overlaps a first end of a second strip. Arranging the strips may comprise layering strips, one on top of the other, to provide a plurality of layers. The method may further comprise positioning the strips of a first layer at angles with the strips of a second layer.

Arranging the strips may comprise positioning at least some of the strips to overlap substantially along a length of each strip. Arranging the strips may comprise positioning at least some of the strips in parallel, such that a first end of one strip substantially overlaps a first end of a second strip.

According to another aspect the invention comprises a shaped fabric comprising: reinforcing elements comprising filaments; and an activated and polymerized resin encasing the filaments; wherein the fabric comprises a first surface and an opposing second surface, and wherein both the first surface and the second surface are free of a separate polymerized plastic sheet.

Additional reinforcing elements may be present along predicted lines of force to which the fabric will be subjected.

Additional reinforcing elements may be present in a region of the fabric that is predicted to be subject to higher forces.

The additional reinforcing elements may be positioned substantially parallel to the predicted lines of force. The additional reinforcing elements may be positioned substantially perpendicular to the predicted lines of force.

The additional reinforcing elements may be positioned substantially parallel and substantially perpendicular to the predicted lines of force.

The fabric may be formed primarily of reinforcing elements and resin.

According to another aspect the invention comprises a fabric consisting essentially of reinforcing elements comprising filaments; and an activated and polymerized resin encasing the filaments.

According to another aspect the invention comprises a sail comprising a reinforced fabric, the reinforced fabric comprising reinforcing elements comprising filaments; and an activated and polymerized resin encasing the filaments; wherein the fabric comprises a first surface and an opposing second surface, and wherein both the first surface and the second surface are free of a separate polymerized plastic sheet.

Additional reinforcing elements may be present along predicted lines of force to which the sail will be subjected. Additional reinforcing elements may be present in a region of the sail that is predicted to be subject to higher forces. The additional reinforcing elements may be positioned substantially parallel to the predicted lines of force. The additional reinforcing elements may be positioned substantially perpendicular to the predicted lines of force. The additional reinforcing elements may be positioned substantially parallel and substantially perpendicular to the predicted lines of force.

The fabric may be formed primarily of reinforcing elements and resin.

According to another aspect the invention comprises a sail comprising a reinforced fabric, the reinforced fabric consisting essentially of: reinforcing elements comprising filaments; and an activated and polymerized resin encasing the filaments.

According to another aspect the invention comprises a fabric comprising: a plurality of strips, each of the strips being formed from a plurality of substantially parallel reinforcing elements, each of the substantially parallel reinforcing elements comprising substantially parallel filaments; and an activated resin encasing the filaments to form a fabric; wherein at least some of the plurality of strips partially overlap adjacent strips.

The fabric may comprise a first surface and an opposing second surface, and wherein both the first surface and the second surface are free of a separate polymerized plastic sheet.

At least one additional strip may be present along predicted lines of force to which the fabric will be subjected. At least one additional strip may be present in a region of the fabric that is predicted to be subject to higher forces. At least one additional strip may be positioned substantially parallel to the predicted lines of force. At least one additional strip may be positioned substantially perpendicular to the predicted lines of force.

At least one additional strip may be positioned substantially parallel and at least one additional strip is positioned substantially perpendicular to the predicted lines of force.

According to another aspect the invention comprises a fabric for making a sail, comprising a plurality of strips, each of the strips being formed from a plurality of substantially parallel reinforcing elements, each of the substantially parallel reinforcing elements comprising substantially parallel filaments; and an activated resin encasing the filaments to form a fabric; wherein at least some of the plurality of strips partially overlap adjacent strips and wherein the strips are arranged to accommodate the expected forces in the sail.

At least one additional strip may be present along predicted lines of force to which the fabric will be subjected. At least one additional strip may be present in a region of the fabric that is predicted to be subject to higher forces. At least one additional strip may be positioned substantially parallel to the predicted lines of force. At least one additional strip may be positioned substantially perpendicular to the predicted lines of force. At least one additional strip may be positioned substantially parallel and at least one additional strip is positioned substantially perpendicular to the predicted lines of force.

According to another aspect the invention comprises a shaped fabric comprising a plurality of strips, each of the strips being formed from a plurality of substantially parallel reinforcing elements, each of the substantially parallel reinforcing elements comprising substantially parallel filaments; and an activated resin encasing the filaments to form a fabric; wherein at least some of the plurality of strips partially overlap adjacent strips, and wherein the filaments are oriented in a predetermined, three-dimensional fashion to form a shaped fabric.

The fabric may comprise a first surface and an opposing second surface, and wherein both the first surface and the second surface are free of a separate polymerized plastic sheet. At least one additional strip may be present along predicted lines of force to which the fabric will be subjected. At least one additional strip may be present in a region of the fabric that is predicted to be subject to higher forces. At least one additional strip may be positioned substantially parallel to the predicted lines of force. At least one additional strip may be positioned substantially perpendicular to the predicted lines of force. At least one additional strip may be positioned substantially parallel and at least one additional strip may be positioned substantially perpendicular to the predicted lines of force.

According to another aspect the invention comprises a shaped fabric for making a sail, comprising a plurality of strips, each of the strips being formed from a plurality of substantially parallel reinforcing elements, each of the substantially parallel reinforcing elements comprising substantially parallel filaments; and an activated resin encasing the filaments to form a fabric; wherein at least some of the plurality of strips partially overlap adjacent strips and wherein the strips are arranged in a predetermined, three-dimensional fashion to accommodate the expected forces in the sail.

According to another aspect the invention comprises a sail, comprising a plurality of strips, each of the strips being formed from a plurality of substantially parallel reinforcing elements, each of the substantially parallel reinforcing elements comprising substantially parallel filaments; and an activated resin encasing the filaments to form a fabric; wherein at least some of the plurality of strips partially overlap adjacent strips and wherein the strips are arranged to accommodate the expected forces in the sail.

According to another aspect the invention comprises a sail, comprising a plurality of strips, each of the strips being formed from a plurality of substantially parallel reinforcing elements, each of the substantially parallel reinforcing elements comprising substantially parallel filaments; and an activated resin encasing the filaments to form a fabric; wherein at least some of the plurality of strips partially overlap adjacent strips and wherein the strips are arranged in a predetermined, three-dimensional fashion to accommodate the expected forces in the sail.

The strips may be layered, one on top of the other, to provide a plurality of layers. The strips of a first layer may extend at angles with the strips of a second layer. At least some of the strips may overlap substantially along a length of each strip. At least some of the strips may be positioned in parallel, such that a first end of one strip substantially overlaps a first end of a second strip. The strips may be layered, one on top of the other, to provide a plurality of layers. The strips of a first layer may be at angles with the strips of a second layer.

At least some of the strips may overlap substantially along a length of each strip.

At least some of the strips may be positioned in parallel, such that a first end of one strip substantially overlaps a first end of a second strip.

### BRIEF DESCRIPTION OF THE DRAWINGS

**FIG. 1** is an overall side view of the press and the various elements attached to a press.

**FIG. 2** is a front view of the press with a shaping device.

**FIG. 3** is an overall side view of the press with the shaping device in the shaping position.

**FIG. 4** is a front view of the press with the shaping device in the shaping position.

**FIG. 5** is a view of the press with an infrared heating device.

**FIG. 6** is a sectional view of a membrane encasing yarns disposed unidirectionally.

**FIG. 7** is a sectional view of a membrane encasing yarns disposed multidirectionally.

**FIG. 8** is a plan view of strips before pressing.

**FIG. 9** is a plan view of a fabric with strips disposed in different directions.

**FIG. 10** is a sectional view of portions of fabric shaped in three dimensions.

**FIG. 11** is a sectional side view of a spread-out fabric.

**FIG. 12** shows a seizing station in which seizing is burned off of commercially available carbon yarns prior to tape formation.

**FIG. 13** shows a spreading and glue station in which carbon yarns are separated into filaments and coated with glue to form carbon tapes.

**FIG. 14** shows a spreading and glue station in which multiple carbon yarns are separated into filaments and coated with glue to form carbon tapes.

**FIG. 15** shows an unspooling and unwinding station in which yarns are unwound prior to tape formation.

**FIG. 16** shows a spacer station in which yarns are spaced apart prior to separation into filaments.

**FIG. 17** shows a spreading station, including three rollers collectively termed a tension equalizer. The tension equalizer tensions the yarns and also helps to separate the yarns into filaments.

**FIG. 18** shows an overview of the yarns feeding from a spacer station to a spreading station with tension equalizer, and then feeding into a second spreading station.

**FIG. 19** shows a spreading station which includes knives and bars to spread the yarns into filaments.

**FIG. 20** shows a tape placement station, including a gantry head which positions tapes onto a plotting table to form a panel.

**FIG. 21** shows the first laid tapes of a sail corner.

**FIG. 22** shows an overview of a tape placement station, including a plotting table, gantry, and gantry head. The first laid tapes of a sail corner are also shown.

**FIG. 23** shows multiple sections or panels laid up on a plotting table. The gantry and head are also shown.

**FIG. 24** shows formed panels positioned on a three-dimensional mold.

**FIG. 25** shows another view of the panels positioned on a three-dimensional mold.

**FIG. 26** shows the formation of a vacuum bag over the panels on the mold.

**FIG. 27** shows a drag blanket being used to apply heat to the pressurized panels beneath the vacuum bag.

**FIG. 28** shows the composite sail, ready for trimming and finishing.

### DETAILED DESCRIPTION

In the following section, methods of forming reinforced and shaped fabrics are described. Section I relates to forming shaped and reinforced fabrics using a press. Section I also relates to various press embodiments and methods of forming fabrics and sails using such press embodiments. Section II relates to methods of forming fabrics using shaped molds; no press is required.

The present disclosure uses several terms, as defined below.

As used herein "about" will be understood by persons of ordinary skill in the art and will vary to some extent on the context in which it is used. If there are uses of the term which are not clear to persons of ordinary skill in the art given the context in which it is used, "about" will mean up to plus or minus 10% of the particular term.

As used herein, the term "yarn" refers to an untwisted assemblage of fibers or filaments (also called "reinforcing elements" herein), either natural or man-made, combined together to form a continuous strand. As used herein, the terms "filament," "fiber" and "reinforcing element" are used interchangeably.

As used herein, the terms "tape" and "strip" are used interchangeably and refer to a tape or strip formed mainly of a resin or glue and yarns (reinforcing elements) or filaments. Generally, the reinforcing elements or filaments of a tape run lengthwise through the tape. A single tape may include a single type of yam or filament (*e.g*., carbon only), or yarns made up of different types of materials spread into filaments (*e.g*., a combination of one or more of carbon, aramid, polyester, polyamide, liquid crystal polymer (*e.g*., Vectran), ultra high molecular weight polyethylene (UHMWPE, *e.g*., Dyneema, Spectra), poly-p-phenylenebenzobisoxazole (PBO), M5 fiber (developed by Akzo Nobel), nylon, and rayon). Tapes may also be formed using a single type of glue or resin, or a combinations of glues or resins. Other components may also be added to the tapes. By way of example, but not by way of limitation, ultraviolet protectants, moisture protectants, lubricants or anti-abrasion agents, antioxidants, mildew and mold protectants, hardeners, dyes, carbon and fiberglass may be added to the tapes. In some embodiments, the tapes include a mesh or nonwovens or scrim overlapping or sandwiching the filaments.

As used herein, the term resin or glue are used interchangeably. Examples of resins and glues include, but are not limited to thermoplastic and thermoset glues or resins such as provided in the table below:

| **Producer** | **Name** | **Thermoset/thermoplastic** |
|---|---|---|
| EMS | 2AS | Thermoplastic |
| Schmits | Bemicoll XOO-l 09 | Thermoset |
| Schmits | Bemithane ALW | Thermoset |

### I. Method of forming shaped and reinforced fabric using a press

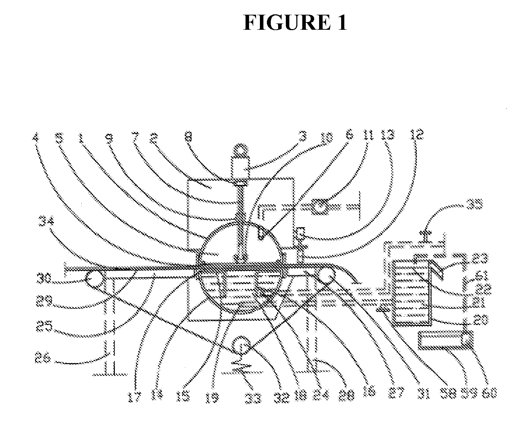

With reference first to **FIG. 1****,** a press is constituted by an upper chamber 1 and a lower chamber 14. The lower chamber 14 comprises L-shaped angle irons 15 and 16. The upper part of the lower chamber 14 comprises a flexible element 17 (a silicone membrane for example) which is mounted hermetically on the lower chamber 14. The lower chamber 14 is filled with water 18 which is brought via a water inlet 24. The water inlet is controlled by a valve 35. The lower chamber comprises a water outlet 19 which is a balancing outlet. The water outlet 19 is connected by a duct to a tank 20 which contains water 21. The tank comprises a water overflow 23 which determines the height of the water level 22. The height of the water level 22 is provided to be at the level of the lower face of the flexible element 17. The water level in the lower chamber is thus controlled by the communicating vessels principle. A valve 58 is mounted between the water outlet 19 and the tank 20. Closing of the valve 58 makes it possible to block off the water circulation and annul the communicating vessels principle. A balancing tank 59 is placed under the overflow 23. When water overflows via the overflow 23 into the balancing tank 59, the surplus water in the balancing tank is constantly taken back into the tank 20 via a duct 61 which is connected to a pump 60. The upper chamber 1 is closed off in its lower part by a flexible element 4 which is mounted hermetically with the upper chamber. The upper chamber contains air 5 which is brought via an air inlet 6. The pressure of the air is controlled by a manometer 11. The upper chamber 1 comprises reinforcing elements 2. A metal girder 3 is mounted on the reinforcing elements, the whole being assembled by welding for example. The metal girder 3 is connected to an actuator or to any mechanical device whatsoever making it possible on the one hand to lift up the chamber during the preparation operations or to apply a pressure downwards during the pressing operation. A yarned rod 7 which comprises an activation nut 8 cooperates with a tapped element 9 which is mounted on the upper chamber. The lower end of the rod is connected with play to a shaping bar 10. A preparation table 25 is mounted on feet 26 and a receiving table 27 is mounted on feet 28. A conveyor belt 29 is mounted able to move on the tables and on the flexible element 17 of the lower chamber 14. The conveyor belt is supported by two fixed rollers 30 and 31 and by a movable roller 32 which is subject to the action of a draw spring 33 which adjusts the tension of the conveyor belt 29 according to the deformations thereof. The reinforced strips 34 which constitute the fabric once the pressings have been performed are prepared on the conveyor belt, and then pass under the press and come out in the form of a fabric constituted by a membrane which encases filaments.

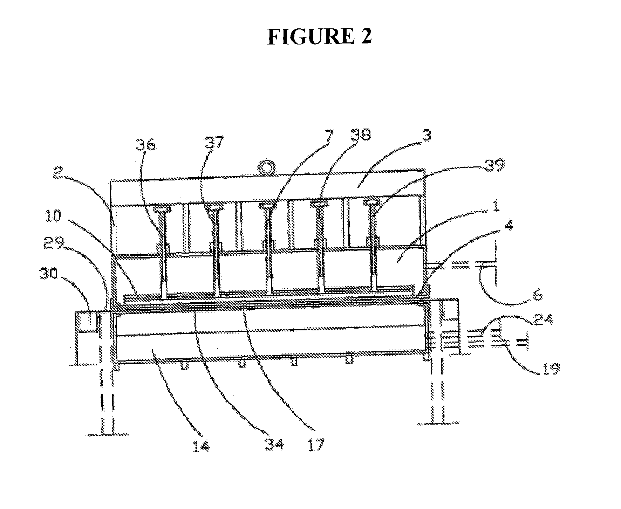

**FIG. 2** shows in a front view the yarned rods 36, 37, 7, 38, 39, which are connected in their lower part to the shaping bar 10. The shaping bar is not fixed to the rods in its longitudinal direction, but is mounted able to move so that when the shaping bar is deformed the tensions on it can be absorbed. **FIG. 2** shows the metal girder 3, the upper chamber 1 in which the shaping bar is installed and the reinforcing elements 2 of the upper chamber, the flexible elements 4 and 17, the water inlet 24, the balancing water outlet 19, the air inlet 6, the lower chamber 14, the conveyor belt 29 and the roller 30 and the reinforced strips 34.

The position shown in **FIGS. 1** and **2** is the flat pressing position in which the shaping bar is in the inactive position. In this position, the water in the lower chamber is kept at its level by the communicating vessels principle and then the valve 58 is closed, and the air contained in the upper chamber is put under pressure, at a pressure value which is determined by the kind of resin of the reinforced strips.

During the pressing, the resin must be heated to or activated at a temperature determined by the kind of resin. Several heating possibilities can be provided according to **FIG. 1****.** One possibility is heating of the air contained in the upper chamber. One possibility is heating of the water contained in the lower chamber. One possibility is heating of the preparation table just before the reinforced strips are moved under the press.

For the case where the heating is not obtained by the preparation table, this table is in any case heated to a certain temperature necessary for a slight adhesion of the reinforced strips in order to facilitate the putting down of these strips.

**FIG. 1** shows an immobilizing element 12 which is activated by an immobilizing actuator 13. In the position of movement of the conveyor belt, the immobilizing element is inactive.

In practice, the first reinforced strips are disposed on the preparation table. Once the reinforced strips have been put down, the conveyor belt places these first reinforced strips under the press, the upper chamber is moved towards the base until contact with pressure is made on the lower chamber, by heating and the air pressure in the upper chamber the reinforced strips are converted into a membrane encasing filaments, the whole constituting an impervious or pervious fabric. One or both chambers are cooled, thus cooling the membrane. Movement of the reinforced strips by the conveyor belt leaves a portion of the strips on the preparation table for connection with the second series of reinforced strips. During the time of pressing the first reinforced strips, the second strips are disposed on the preparation table and when the operation of pressing the first reinforced strips is accomplished, the air pressure is reset to ambient pressure, the upper chamber is lifted up and the second reinforced strips are placed under the press. The manufacturing time for a fabric is determined by the time necessary for heating of the reinforced strips and cooling. By way of example, according to the resins used, the pressing time can be limited to a few minutes which are necessary in any case for disposition of the next reinforcing strips.

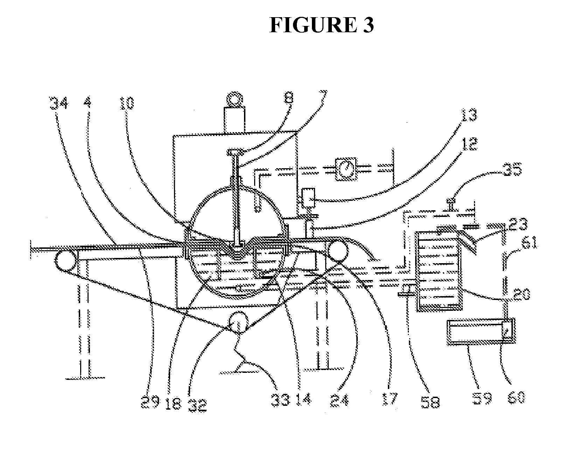

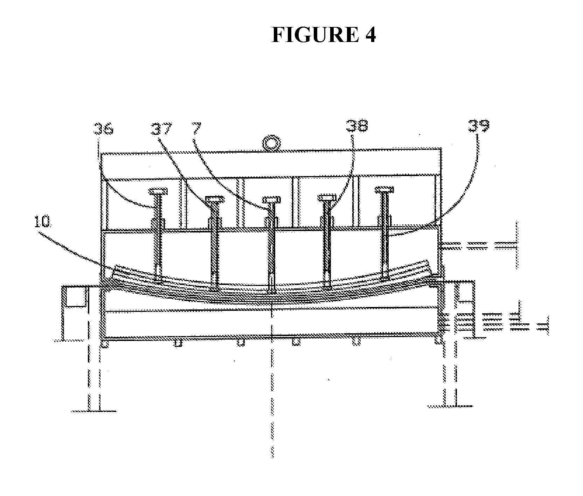

**FIGS. 3** and **4** show the pressing of a portion of reinforced strips with shaping in three dimensions. In this case, when the reinforced strips 34 are installed under the press, the rods 36, 37, 7, 38, 39, are activated, for example by means of nuts such as the nut 8 so as to give an arc shape to the bar 10. The immobilizing element 12 is activated by the immobilizing actuator 13 and immobilizes the portion of fabric already completed. In this way, the yarns of the reinforced strips can take the shape provided for, and therefore the resulting difference in length of the third dimension.

During the pressing with shaping, the flexible elements 4 and 17 and the conveyor belt 29 also take the chosen shape. The movable roller 32 moves upwards while maintaining the tension in the conveyor belt by the spring 33. The shaping position, and therefore the movement of the shaping bar 10 downwards, reduces the volume of the lower chamber 14 and the excess water 18 can leave via the water outlet which goes into the tank 20 and overflows via the overflow 23. The valve 58 is closed immobilizing the quantity of water in the chamber 14, and the air 5 is put under pressure.

When the pressing is complete, the shaping bar is replaced into the inactive position, the valve 58 is opened, the water is put back to its level by the pump 60 which takes the excess water contained in the balancing tank 59 back into the tank 20 via the duct 61. The other pressing operations are identical to the flat pressing operations.

In practice and with the aim of obtaining the desired finished fabric shape in three dimensions, some portions of the fabric are pressed flat, and others with various shapes of the shaping bar.

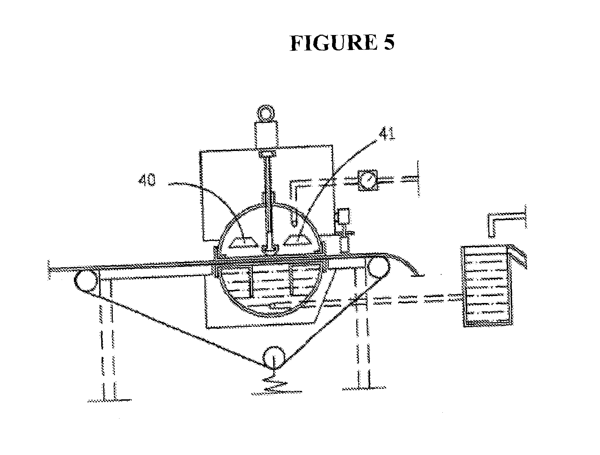

**FIG. 5** shows another heating possibility with infrared heating elements 40 and 41 which are disposed in the upper chamber.

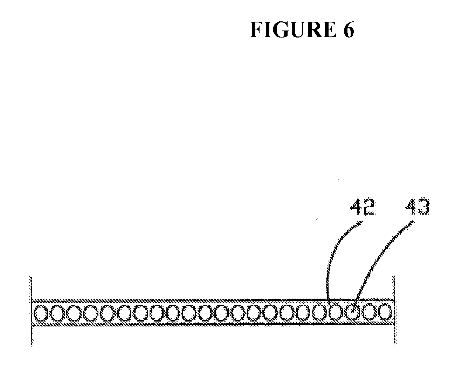

**FIG. 6** shows a portion of fabric with the membrane 42 which encases the yarns 43 disposed unidirectionally. In practice and after pressing, the yarns are in fact constituted by thousands of filaments.

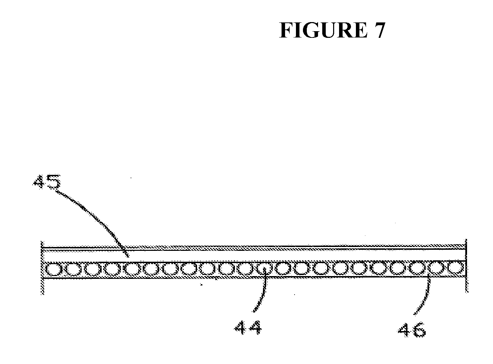

**FIG. 7** shows a portion of fabric with the membrane 46 encasing warp yarns 44 and weft yarns 45 multidirectionally.

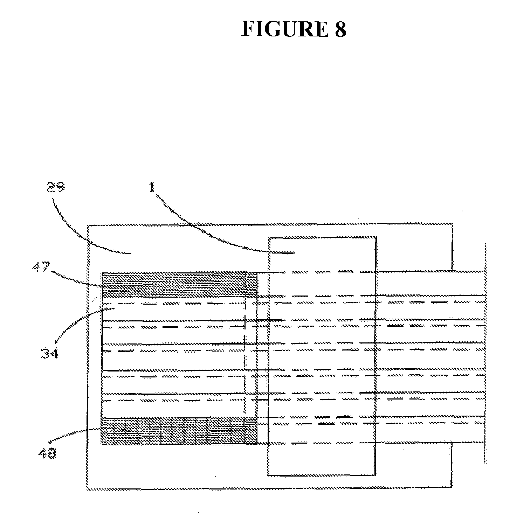

**FIG. 8** shows in plan view the reinforced strips 34 which are disposed on the conveyor belt 29 which is placed on the preparation table with passage under the press depicted in this figure by the upper chamber 1. **FIG. 8** shows different sorts of unidirectional 47 or bidirectional 48 reinforced strips which can be used by way of example.

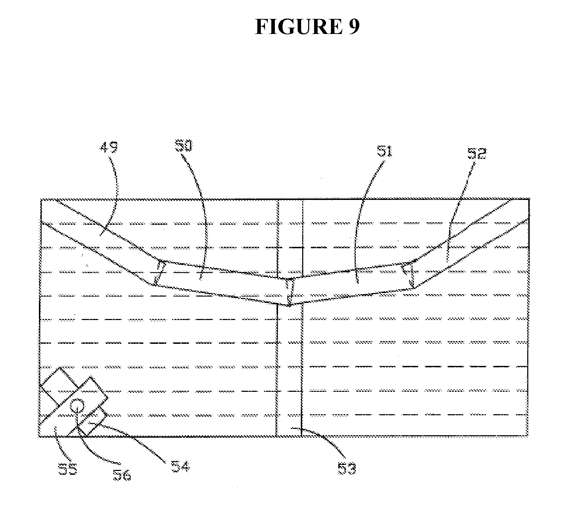

**FIG. 9** is a plan view of a fabric which shows a few example possibilities of disposition of reinforced strips, that is the reinforced strips 49, 50, 51, 52, which make it possible to obtain strength in an arc, the strip 53 which has a reinforcement at 90°, or strips 55 and 54 which can be disposed at the location of an eyelet 56 for example.

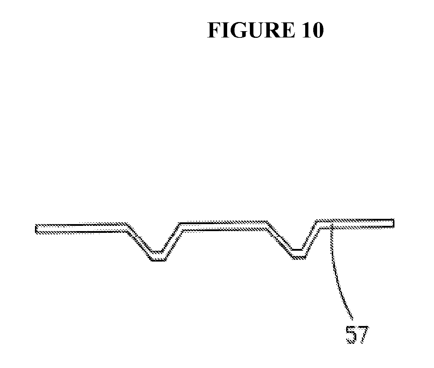

**FIG. 10** shows a sectional view of a fabric with portions deformed in three dimensions according to **FIG. 4** in the non-taut position.

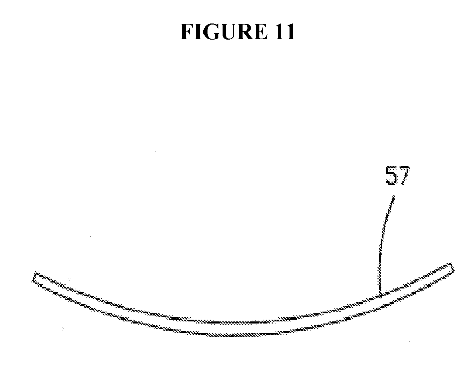

**FIG. 11** shows the three-dimensional shape taken by the fabric when it is taut.

The various activation elements, the yarned rods, the movements of the upper chamber, the forward movement of the conveyor belt, the immobilizing element, opening and closing of the water supplies and outlets, switching on and off of the heating, and the air pressure, can be obtained by electric motors, step-by-step motors for example, actuators, valves or electrical controls. Each of these elements can be connected to a computer whose program manages the activation. It is also possible to dispose the reinforced strips by a transport and placing device which can also be managed by the computer program.

In this way, the manufacture of the fabric can be fully automatic.

There are numerous uses for fabrics in three dimensions, and these fabrics can be used in all cases requiring light, very strong and three-dimensional fabrics.

### II. Method of forming shaped and reinforced fabric using a three-dimensional mold

In the following section, another method of forming reinforced and shaped fabrics is described. In this section, methods are described in the context of sail manufacture. It is understood, however, that the same methods can be applied to shaped, reinforced fabrics for other uses.

In this example, a three dimensional sail pattern is created, using for example, conventional computer design programs, such as computer-aided design (CAD) and computer-aided engineering (CAE) software. Once a pattern is established, the software is then used to create a specific mold design to form the sail according to the pattern. The mold design information is then used to shape a mold (*e.g*., an articulating, moveable mold) into the proper shape. For example, a mold may be controlled by actuators via a computer program. Once formed, the mold surface is then evaluated to verify the accuracy of the shape.

In some embodiments, the sails are formed from multiple panels, with each panel formed from multiple, overlapping strips or tapes. As described above, the tapes are made up of yarns, such as carbon or aramid yarns, that have been spread out into filaments. The filaments are held together by a coating of resin or glue.

Similar to the method described in Section I, the panels are positioned to overlap adjacent panels, and adjacent panels are joined together by applying heat and pressure, allowing the glue and filaments from adjacent and overlapping strips of the panels to intermix. In this embodiment, however, instead of using a press, the panels are positioned on a three-dimensional, sail-shaped mold so that the final sail, or a region of the sail (depending on the size of the mold) will have the same or similar three-dimensional shape as the mold.

Generally, the mold is the size and shape of the finished sail. In some embodiments, the mold is deformable and its shape can be altered to have the desired shape and contours of the finished sail. Additionally, in some embodiments, the mold is configured to be heated or to provide heat, and to be subject to a vacuum pressure or to provide a vacuum.

For example, in some embodiments, once the panels are positioned on the mold, a vacuum bag is formed over the positioned panels on the mold, and a combination of heat and pressure is used to meld the tapes of the panels into a contiguous piece of fabric.

The method is described in more detail below, and is broken down into the following steps: A) tape creation; B) tape lay-up and panel formation; and C) assembling panels. Section D) describes forming panels, or the entire sail, directly onto a mold.

### A. Tape creation

The sails disclosed herein are formed mainly of tapes made up of glue and yarns, such as aramid or carbon. The yarns are spread out into filaments and the filaments are coated with glue to form the tapes. By way of example, but not by way of limitation, the formation tapes including carbon and aramid is described below.

### 1. Carbon tapes

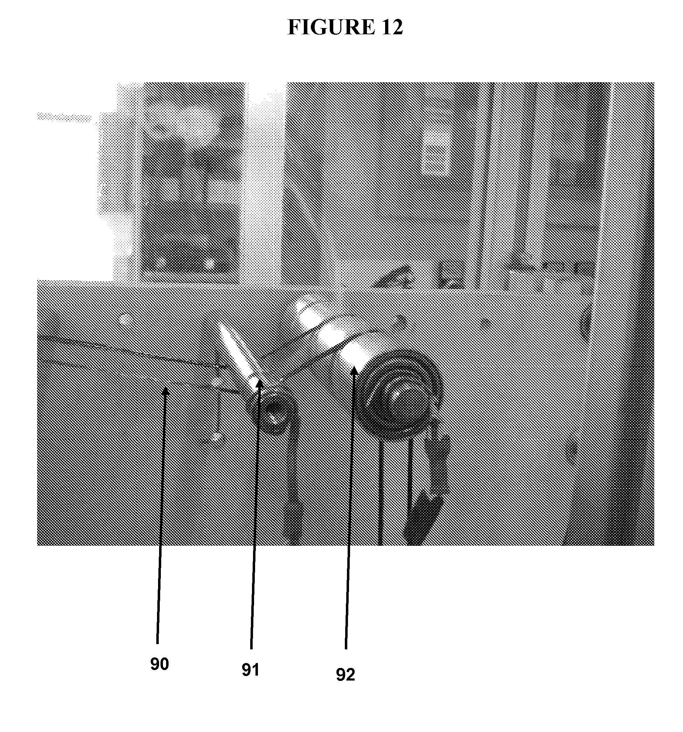

In some embodiments, the carbon yarns used in the present methods are readily commercially available (*e.g*., Grafil 34 24K 0.7%A from Grafil, Inc., Sacramento, CA). Generally, manufacturers of such carbon yarns apply a seizing to the yarns, causing the filaments that make up the yarns to better adhere to one another. In some embodiments, this seizing must first be removed from carbon yarns, as the seizing can detrimentally affect spreading of the yarns into filaments. A seizing station, such as the one shown in **FIG. 12****,** can be used to remove the seizing from carbon yarns. The seizing station includes two electrified rollers 91 and 92. The carbon yam 90 is tensioned and in contact with both rollers. As carbon is conductive, the seizing can be burned off the yam using low voltage (∼12 volts) applied to the yam through the rollers.

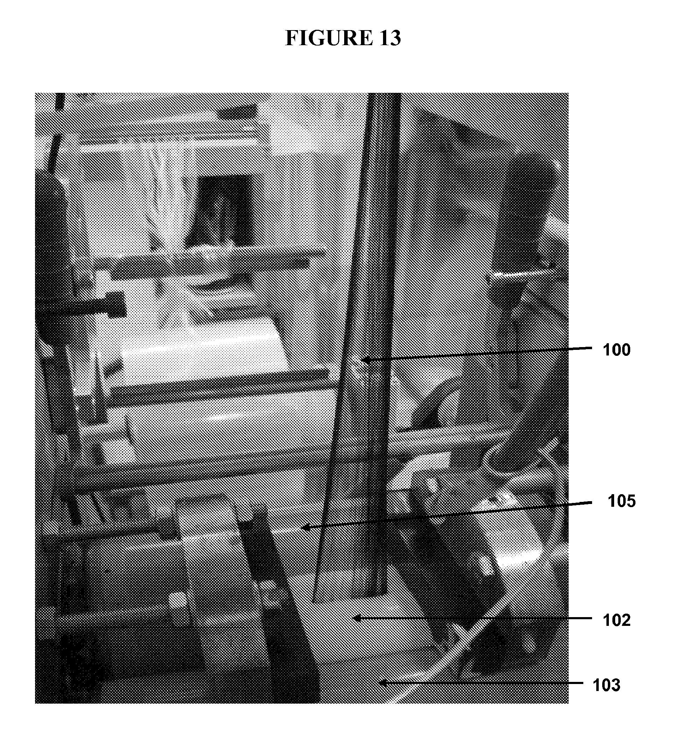

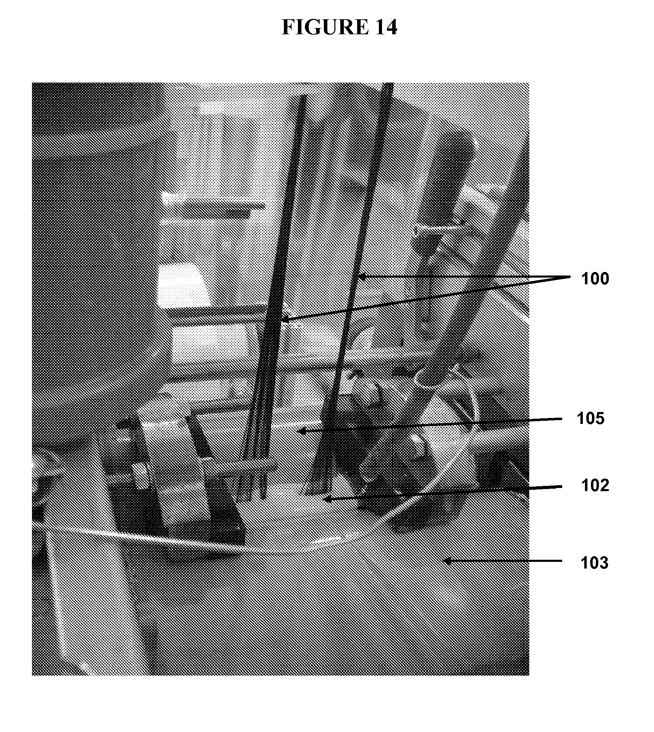

Once the yam has been prepared by removing the seizing, the yarns are spread apart into filaments and coated with glue at a spreading and glue station. Referring to **FIG. 13****,** glue 102 is pooled between two rollers, 103 and 105 of the spreading and glue station. The rollers 103 and 105 rotate in opposite directions, toward each other. Carbon yarns 100 are threaded between the rollers 103 and 105 and tensioned. Glue 102 is added, and the carbon yam 100 is then rolled through glue 102 and between rollers 103 and 105. As shown in **FIG. 13****,** the carbon yarns 100 begin to separate into filaments before entering the glue pool 102. Referring to **FIG. 14****,** more than one yam 100 may be threaded through rollers 103 and 105, and processed through glue 102 of a spreading and glue station. As the glue dries on the separated filaments, the carbon tapes are formed.

### 2. Aramid

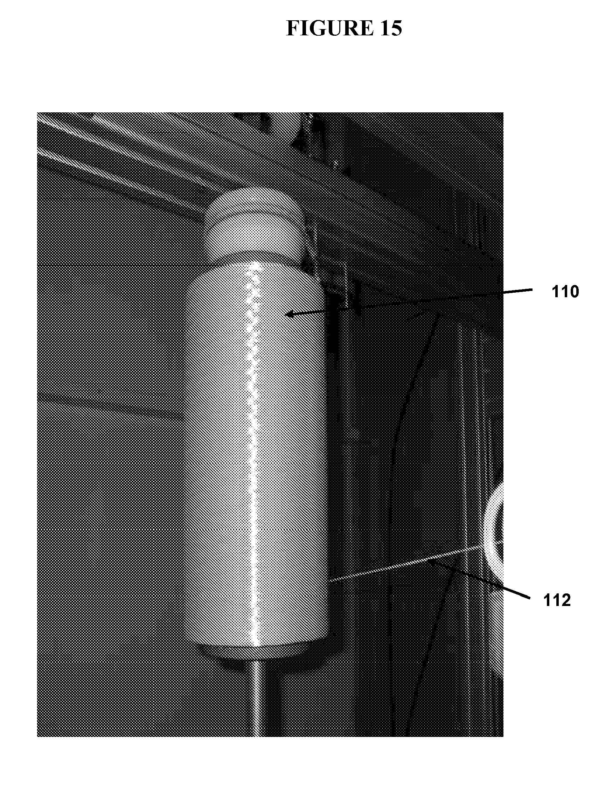

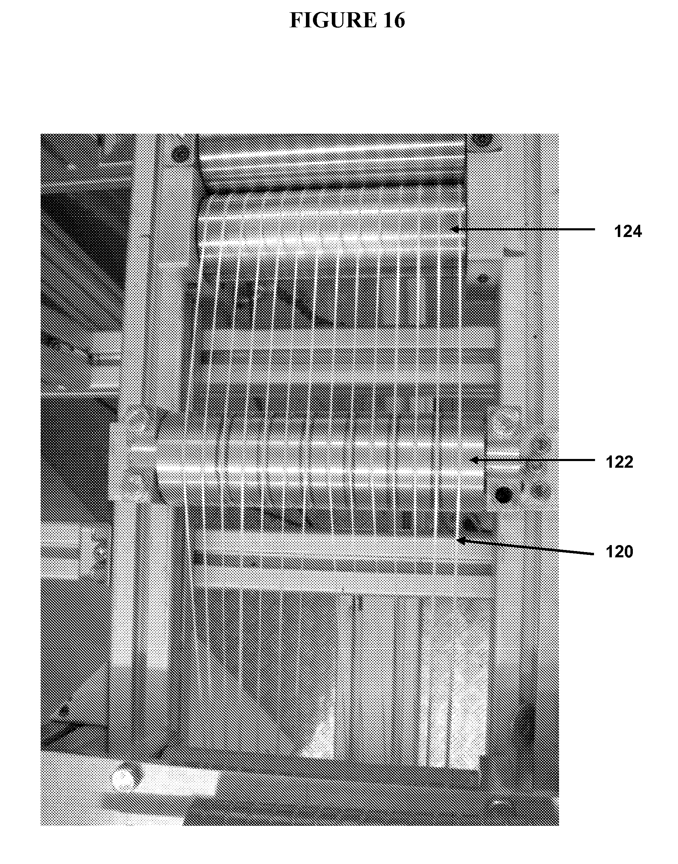

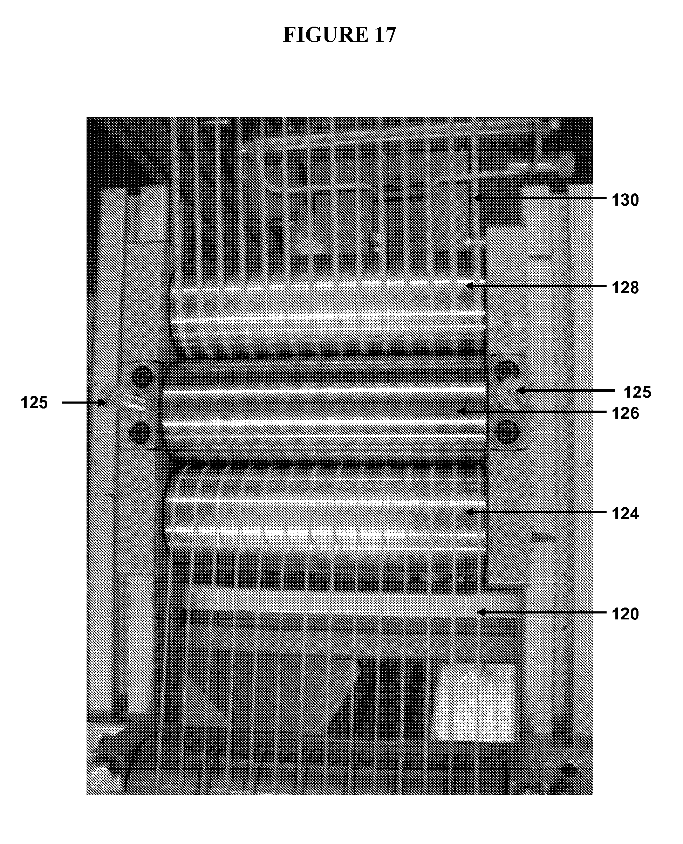

Similar to carbon yarns, aramid yarns are also readily, commercially available (*e.g*., Kevlar 49 1580 Dtex). Referring first to **FIG. 15****,** to form the aramid yarns into filaments, in some embodiments, the aramid yarns 112 must first be unwound from the spool 110 and untwisted at an unspooling and unwinding station. Turning now to **FIG. 16****,** the untwisted yarns 120 are then forwarded to a spacer station, and are positioned onto spacers 122, rollers with grooves etched into the surface of the roller, the grooves spaced at a desired width apart. The yarns 120 are positioned in the grooves of the spacers 122. For example, to form a tape of approximately 12-13 centimeters wide, comprising 14 yarns of 1000 filament tow of 1670 dtex aramid, a roller with 14 grooves, 11 millimeters (mm) apart is used. Turning to **FIG. 17****,** the spaced yarns are then run through a tension equalizer. In some embodiments, a tension equalizer includes three rollers, 122, 124 and 126, each with an external diameter of about 500 mm. The center roller 126 is pushed down, relative to the outer two rollers 124 and 128, thereby equalizing the tension between the tows. Tension can be adjusted by adjusting the position of the center roller 126, either up or down, relative to the outer rollers 124 and 128, by turning adjusting screws, 125. The tension equalizer also helps to start spreading the yarns into filaments.

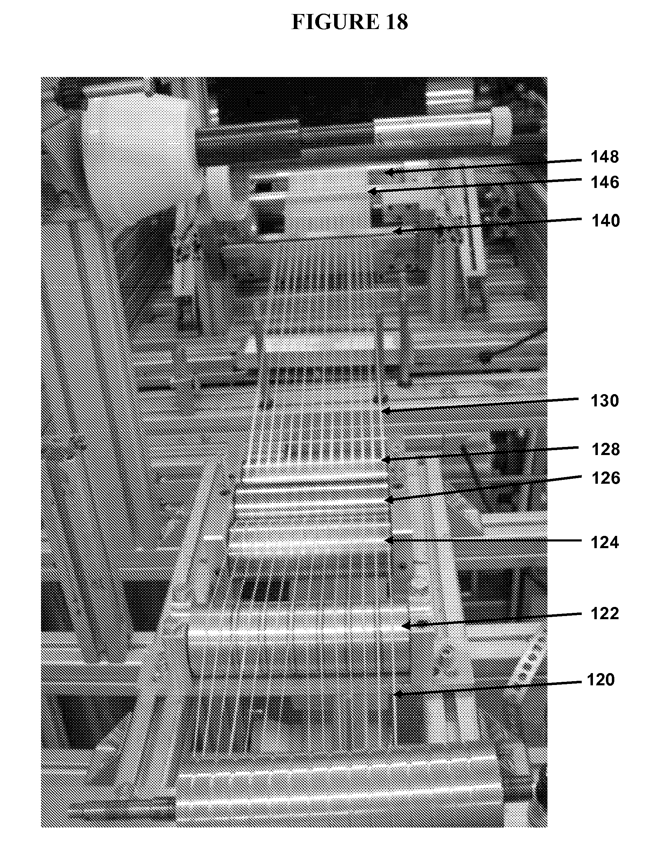

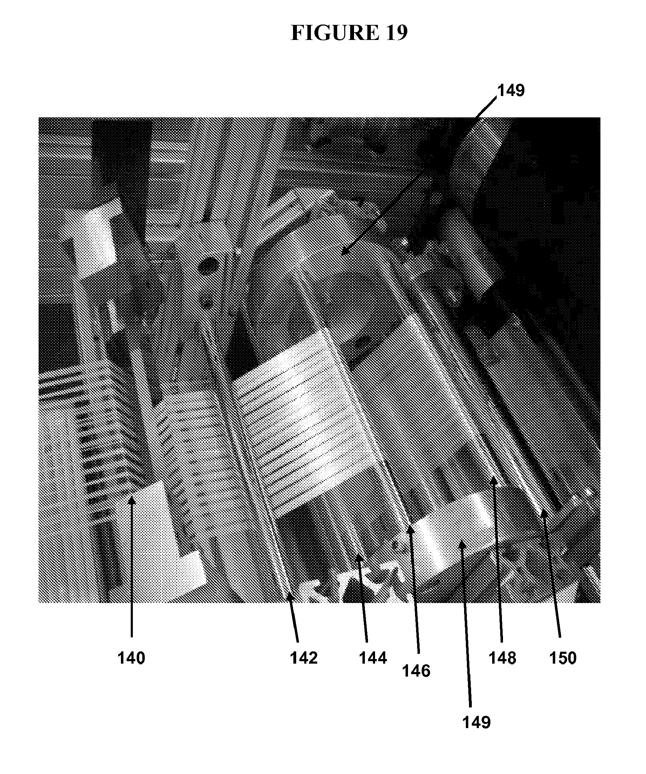

Referring now to **FIG. 18****,** the yarns 120 are then fed over a spreading station which includes a series of knives and bars, chromed and polished flat blades or rollers, 140, 146 and 148. **FIG. 19** illustrates one embodiment of the knife/bar assembly. The first knife 140 has a radius edge of about 1.5 millimeters. The next four bars 142, 144, 146 and 148 are approximately 20 mm in diameter, and the last bar 150 is approximately 40 mm in diameter. Bars 144, 146 and 148 are fixed on 2 disks 149 that can be rotated. The yarns are led over the knife/bar assembly, resulting in the separation of the yarn into filaments. A film of glue (*e.g*., EMS 2AS) is introduced under the 40 mm bar 150 to coat the spreading tows and form the tape. The tape is then spooled into a roll for storage and use.

### 3. Additional tape examples

In addition to the carbon and aramid tape examples described above, any other natural or man-made yarns or filaments may be used to make tapes, and the tapes can generally be formed using any glue or resin, depending on the application. In addition, filaments of one type of yarn (*e.g*., carbon filaments) may be placed adjacent one or more filaments of another type of yarn (*e.g*., aramid filaments) to form a hybrid tape. Such tapes may advantageously combine the advantages of both types of fibers, while minimizing the drawbacks of each. Tapes may be formed of different fibers, glues and additives, depending on the application for the tape within the sail. Non-limiting examples of such tape compositions are provided below.

### a) Tape composition: Filaments and glue only

A tape made of aramid tow, spread into filaments, and held together using a thermoplastic glue, such as EMS 2AS. Such a tape is useful to provide strength in the primary load direction of the sail.

### b) Tape composition: Filaments and scrim

A tape made of aramid tow, spread into filaments, and held together using a thermoplastic glue, such as EMS 2AS. In addition, a scrim material is used as a carrier for the filaments, to hold the filaments together. This tape allows the use of fewer aramid filaments for the same width of tape, or it permits the same number of aramid filaments, but with some spacing between aramid tows. The use of scrim can provide a lighter tape, depending on the amount of aramid filaments, and it provides strength transverse to the primary axis of the tape.

### c) Tape composition: Non-woven and filament

A tape made of aramid tow, spread into filaments, and held together using a thermoplastic glue, such as EMS 2AS. In addition, a non-woven material is used as a carrier for the filaments. The non-woven material is used as an anti-abrasion material on the external surface of the sail. In addition, various additives, such as carbon black, Tinuvin® ( a UV protectant available from Ciba®), and Irganox ® (a heat treating stabilizer available from Ciba®) may be added to the resin to protect the sail.

### d) Tape composition: Non-woven

A non-woven material, with or without additives such as those described above, may be formed in a tape without the use of aramids or other filaments.

### e) Tape composition: Glue

It may be advantageous in some circumstances to add a tape formed from glue, with or without carbon black and/or other additives, but without the use of filaments.

### 4. Other components

Other components may be used to provide additional properties to the tapes, and thus, to the fabrics formed from the tapes. For example, for fabrics which will be exposed to ultraviolet light (*e.g*., sails), a UV protective component may be added to the tapes by incorporating the additive to the resin.

### B. Tape lay-up and panel formation

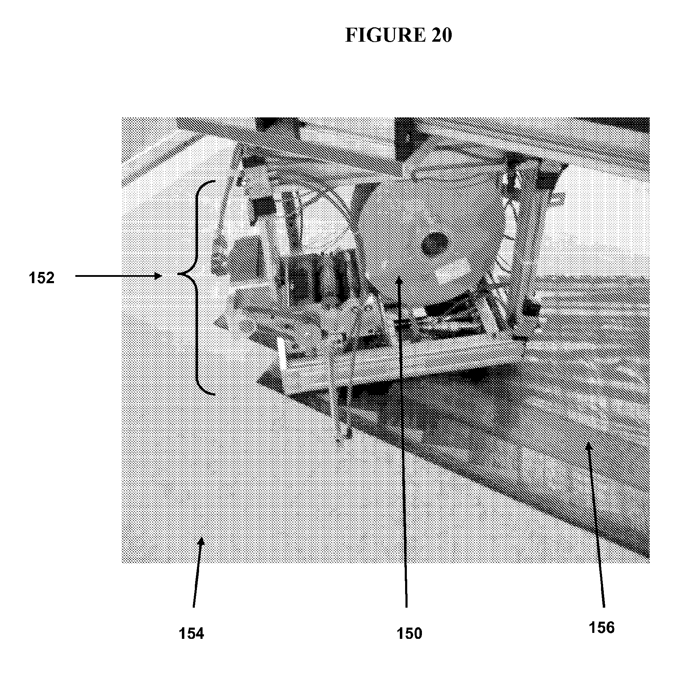

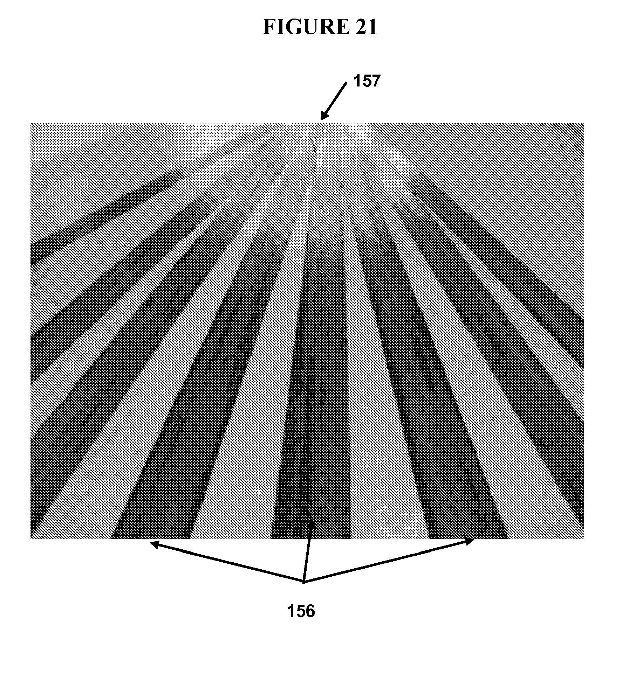

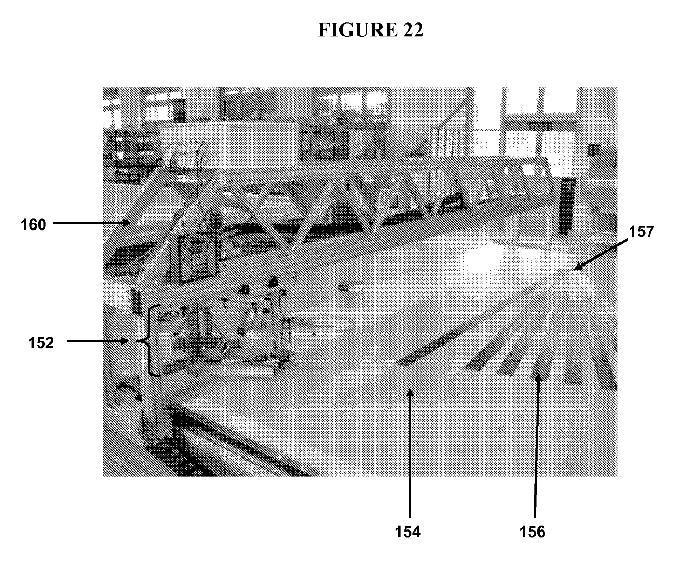

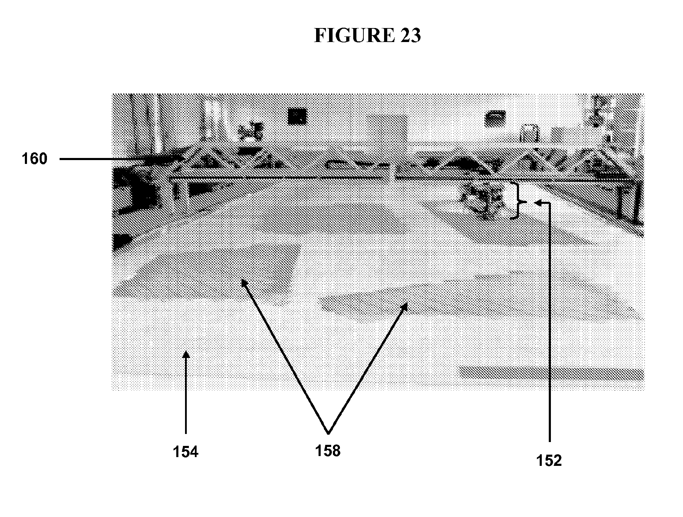

For convenience, the formed tapes may be stored as rolls (*e.g*., similar to a roll of masking tape or duct tape). **FIGURE 20** shows a tape placement station. The tape placement is used to create different sections or panels of a sail. Generally, the tape rolls 150 are positioned on the head of a gantry 152, which is positioned over a plotting table 154. Computer programs are used to direct the gantry/head assembly to roll particular tapes 156 onto the plotting table 154 in specific, 2-dimensional configurations according to the sail pattern. **FIG. 21** show the first laid tapes 156 of a sail corner, and the apex of the corner, 157. The tapes 156 are positioned to radiate from the corner of the sail 157, generally parallel to the predicted load lines of the sail. Accordingly, the filaments within the tapes also radiate from the corner of the sail and are generally parallel to the predicted load lines of the sail. **FIG. 22** shows an overview of the first laid tapes 156 of a sail corner 157, plotting table 154, gantry 160 and gantry head 152. **FIG. 23** shows a plurality of different panels 158 formed on a plotting table 154. The gantry 160 and gantry head 152 are also shown.

The panel pattern, and the sail pattern, take into account both the final three-dimensional shape of the sail as well as reinforcement needs. For example, the various tape compositions described above may be positioned depending on the specific structural needs of the sail. For example, the non-woven or non-woven and filament tapes may be used on the outside plies of the sail fabric. (Additionally, a spun bond or other type of non-woven material could be placed on the exterior of the surface after the sail is created.) Tapes for local reinforcement of the sail (*e*.*g*., reinforcing eyelets, corner pockets, battens, etc.) or for reinforcement of the head, tack, clew and reef points may be placed in adjacent plies. Scrim and filament tapes may be used on inner plies of the sail to provide protection from transverse or off-axis loads encountered when the sail is in use. And the filament and glue only tape composition may be used in a center ply of the sail fabric to provide support along the predicted load lines of the sail and areas predicted to undergo high loads when the sail is in use. In addition, a light film may be added sandwiched between one or more of the plies of tape. This would make the sail fabric air impermeable, without the weight and other drawbacks associated with placing film on the outside of the sail fabric. Generally, the panels are formed such that at least some of the tapes (and the filaments of the tapes) run substantially parallel with anticipated loads in the sail (*e.g*., at least some of the tapes are positioned such that the tape filaments run generally parallel to the predicted load lines, or along at least a portion of the predicted load lines). Tapes are also positioned to provide support to predicted high-load areas. For example, tapes are aligned along load lines, and are positioned to reinforce the corners of the sails, luff, leech, and other areas anticipated to undergo high loads when the sail is in use. Accordingly, some regions of a panel include numerous, overlapping tapes, tapes crossed in different directions, overlapping tapes aligned in parallel, and tapes comprising different resin and reinforcing elements. In addition, at least some of the tapes will be oriented at an angle to the anticipated load lines of the sail. Additionally, different tapes are used to add different, desired properties (*e.g*., reinforcement, lighter weight, flexibility, *etc*.) to different regions of the sail. As an example, the tapes shown in **FIG. 21** and **22** may be overlaid with arcs of tape, with the corner of the sail being roughly the center of the arc. Additional tapes may be added which also radiate from the corner of the sail, etc.

Because the tapes can be made to be slightly tacky, overlapping and adjacent tape layers stick together sufficiently for the formed panels to be maintained. Additionally or alternatively, heat may be applied to the laid-up panels on the plotting table to cause the glue of overlapping and adjacent tapes to become more tacky, allowing the tapes to better adhere to one another, thereby allowing the panels to remain formed. After the panels are formed, they are moved to a three-dimensional mold.

### C. Assembling panels

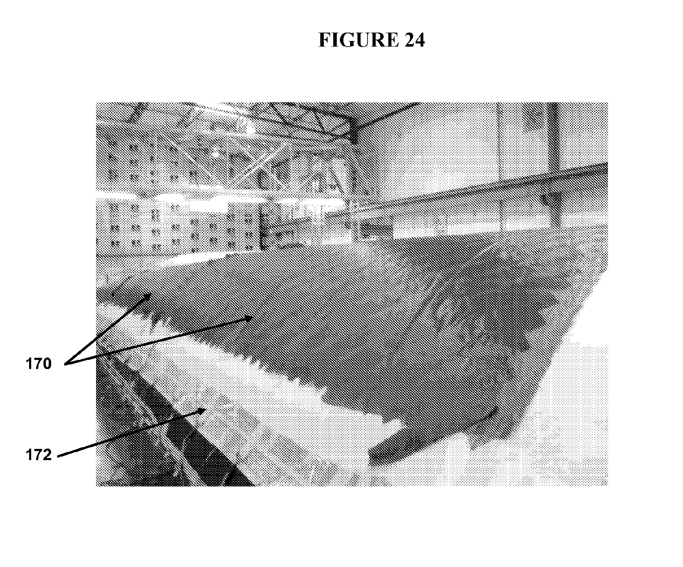

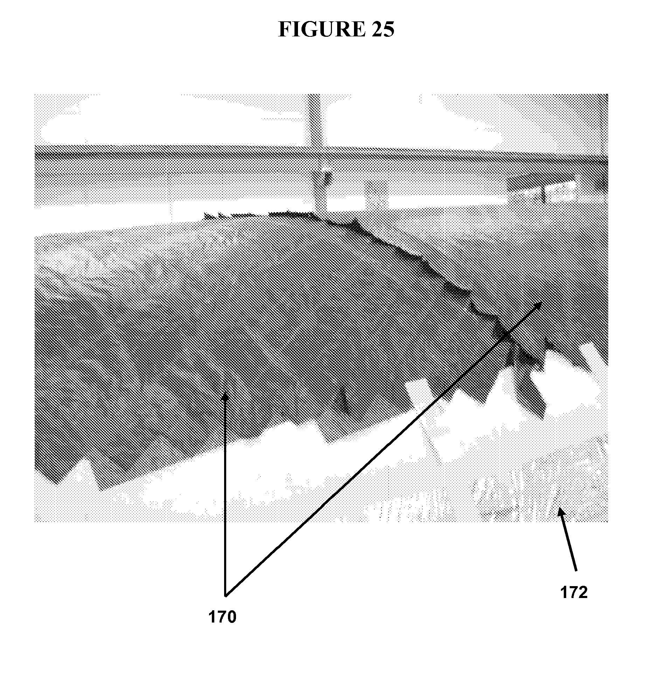

In general, panels are formed with one or more margins along the edge of the panel. Referring to **FIGS. 24** and **25****,** to join the panels, the panels 170 are positioned on a mold formed in the shape of the final sail 172. The margins are used as the region of attachment between panels; that is, the margin of one panel is layered or overlapped onto the margin of an adjacent panel. The width of the overlap is determined by the number of tapes in the cross-sectional thickness of the material. In general, the thicker the cross-section (*i*.*e*., the more tapes in the cross-section), the greater the overlap. The overlapped margins, as well as the rest of the panels, are then subject to heat and pressure sufficient to meld the margins, and tapes together (the heat and pressure allow the glue and filaments of the tapes to intermix), thereby joining the panels, and the tapes within each panel, to form the sail.

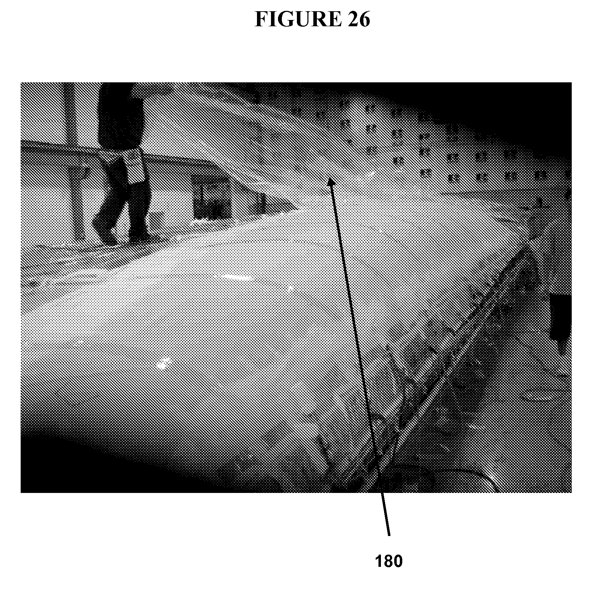

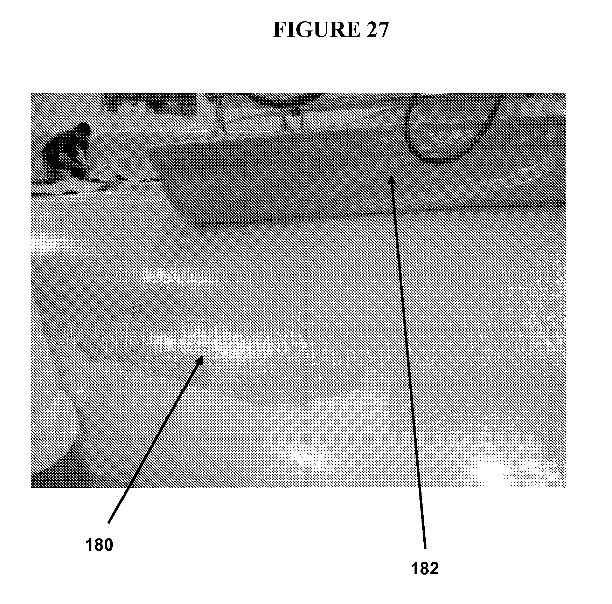

Referring to **FIG. 26** **and** **FIG. 27****,** once the panels are positioned on the mold with adjacent edges overlapping, the panels are then subject to a vacuum. In some embodiments, the panels are covered with a large vacuum bag or vacuum cover 180. A vacuum is applied and the strips/panels are typically compressed at approximately 1,800 pounds per square foot. In some embodiments, strips/panels are compressed at from about 1700 to about 1900 pounds per square foot. In other embodiments, strips/panels are compressed at from about 1500 to about 1800 pounds per square foot; while in still other embodiments, strips are compressed at from about 1800 to about 2000 pounds per square foot.

Similar to the method described in Section I above, the panels are adhered together via the application of pressure and heat. In some embodiments, heat and pressure are applied through the mold. For example, in some embodiments, the mold is equipped with heating elements. In other embodiments, the gantry head is removed and replaced with a carbon element heat "blanket," or hot air may also be used to provide heat. Referring to FIG. 27, a heat blanket 182 is show attached to the gantry head (not shown). The heat blanket 182 positioned cures the pressurized resin under the vacuum bag 180 by imparting a carefully controlled amount of heat. This causes the pressurized strips to conform tightly to the mold. The heat and pressure causes the glue and filaments from overlapping tapes to mingle and adhere, forming a contiguous piece of material. Note that heat and pressure may be applied simultaneously or serially.

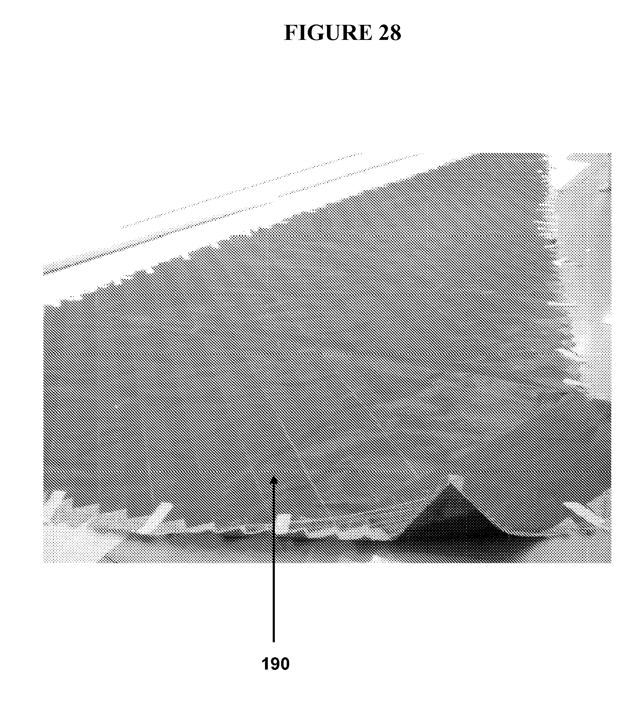

The shaped material, 190 at **FIG. 28****,** is then ready to be trimmed and finished (*e.g*., by adding bolt ropes, batten pockets and protective patches, etc.) to form a sail.

### D. Alternative tape lay-up and panel or sail formation

While the above example describes forming the panels on a plotting table or other surface and then transferring the panels to a mold, in other embodiments, the gantry and head may be positioned over the mold, and tapes may be rolled directly onto the mold, as described below.

To form a panel, the strips are unrolled onto the mold according to the computer generated pattern. A 6-axis head suspended from a computer controlled overhead gantry is used to apply the strips onto the surface of the mold, following the three-dimensional curve of the mold surface. The head forms a pattern of the strips that matches anticipated loads in the sail (*e.g*., some of the tapes are positioned such that the filaments of the tapes run generally parallel to predicted load lines). As described above, the pattern accounts for reinforcement along the predicted load lines of the finished sail, at locations that need reinforcement (*e.g*., corners, leech, luff, etc.) as well as the final, three-dimensional shape of the finished sail. Accordingly, some regions of the panel included numerous, overlapping strips, strips crossed in different directions and overlapping strips aligned in parallel, and strips comprising different resin and reinforcing elements.

Similar to the method describe above in Section C, once the strips are laid, they are then covered with a large vacuum bag that compresses the strips at approximately 1,800 pounds per square foot. The pressurized strips are treated with a heat blanket to cure the pressurized resin, causing the strips to conform tightly to the mold.

Once the strips are joined together and cured, trimming and finishing may begin.

## Claims

1. A method of manufacturing a sail comprising:
positioning strips, comprising filaments and resin, onto a first surface to form panels,
positioning the panels onto a shaped mold, wherein adjacent panels overlap;
applying pressure and heat to the panels on the mold thereby joining the panels to form a shaped fabric; and
forming a sail from the shaped fabric.

2. A method of manufacturing a sail comprising:
positioning strips, comprising filaments and resin, onto a shaped mold;
applying pressure and heat to the strips on the mold, thereby joining the strips to form a shaped fabric; and
forming a sail from the shaped fabric.

3. The method of claim 1, or of claim 2, wherein the filaments comprise carbon, or aramid.

4. The method of claim 1, or claim 2, or claim 3, wherein applying pressure comprises applying a vacuum.

5. The method of claim 1, or claim 2, or claim 3, wherein the pressure is applied from about 1700 to about 1900 pounds per square foot.

6. The method of claim 1, claim 2, or claim 3, wherein the pressure is applied to about 1800 pounds per square foot.

7. The method of claim 1, or claim 2, or claim 3, wherein applying pressure comprises subjecting the panels on the mold to a vacuum.

8. The method of claim 1, or of any preceding claim wherein the heat is applied with a heat blanket.

9. The method of claim 1, or of any preceding claim wherein positioning the strips comprises positioning a strip such that the filaments of the strip are generally parallel to a line of force to which the sail will be subjected.

10. The method of claim 9, wherein the sail has at least one corner, and the filaments of at least some of the positioned strips extend outwardly from the corner in a non-parallel orientation.

11. The method of claim 1, or of any preceding claim, wherein positioning the strips comprises positioning a strip in a location on the sail that is predicted to require reinforcement.

12. The method of claim 11, wherein the location on the sail predicted to require reinforcement optionally comprises a corner.

13. The method of claim 1, or claim of claim 2, wherein applying pressure comprises forming a vacuum bag over the panels on the mold.

14. The method of claim 9,, or any claim dependent directly or, indirectly from claim 9, wherein the sail has at least one corner, and the filaments of at least some of the positioned strips extend outwardly from the corner in a non-parallel orientation.

15. The method of claim 13, wherein positioning the strips comprises positioning a strip in a location on the sail that is predicted to require reinforcement.
